# EUROPÄISCHE PATENTANMELDUNG

(11) **EP 1 577 163 A2**
(43) Veröffentlichungstag der Anmeldung: **21.09.2005**
(21) Anmeldenummer: 05003994.0
(22) Anmeldetag: 24.02.2005
(51) Int. Cl.: B60Q 3/02

(54) **Bestrahlungsvorrichtung zur Steigerung der Vigilanz eines Fahrers eines Fahrzeuges**

(30) Priorität: 17.03.2004 DE 102004012922
(71) Anmelder: Wiemers, Siegfried, 38542 Leiferde (DE)
(72) Erfinder: Wiemers, Siegfried, 38542 Leiferde (DE)
(74) Vertreter: Kloiber, Thomas

(57) **Zusammenfassung**

Eine für die Bestrahlung eines Fahrzeugführers (3) zur Unterdrückung der Melatoninproduktion und Erhöhung der Wachsamkeit geeignete Bestrahlungsvorrichtung mit mindestens einer im Kopfbereich des Fahrzeugführers (3) angeordneten Leuchte (1) wird hinsichtlich ihrer Blendfreiheit bei ungeminderter Wirksamkeit erfindungsgemäß dadurch verbessert, dass die Leuchte (1) im wesentlichen ungerichtetes, diffuses Licht (7) abstrahlend ausgebildet und außerhalb oder zumindest im Randbereich des Sichtfeldes des Fahrzeugführers (3) angeordnet ist.

## Beschreibung

Die Erfindung betrifft eine Bestrahlungsvorrichtung zur Bestrahlung eines Fahrzeugführers, mit mindestens einer im Kopfbereich des Fahrzeugführers angeordneten Leuchte.

Es ist bekannt, dass durch Lichtbestrahlung die Physiologie und das Wohlbefinden des Menschen beeinflusst werden kann. Insbesondere kann die bei Dunkelheit verstärkte Melatoninproduktion durch Lichteinfluss verringert werden. Bei Melatonin handelt es sich um ein Hormon, welches den Menschen schläfrig macht. Deshalb führt länger anhaltende Dunkelheit zu Müdigkeit. Gemäß jüngeren Forschungsergebnissen gibt es im Auge ein nicht visuelles Photopigment in den Gangliozellen der Retina, welches unter Bestrahlung mit relativ geringen Lichtmengen eine Unterdrückung der Melatoninproduktion bewirkt. Die größte biologische Wirkung wird durch blaues Licht mit einer Wellenlänge von ungefähr 464 nm erreicht. Deswegen hat einfallende Strahlung von einem blauen Himmel eine wesentlich bessere Wirkung hinsichtlich der Unterdrückung der Melatoninproduktion als künstliches Licht aus Glühlampen oder Leuchtstofflampen.

Aus der DE 102 32 797 A1 ist bereits eine Vorrichtung zur Steigerung der Vigilanz eines Führers eines Fahrzeuges bekannt, bei der eine elektromagnetische Wellen abstrahlende Quelle in Abhängigkeit von den Signalen einer Sensiereinrichtung zum Erfassen des Aufmerksamkeitsgrades des Fahrzeugführers gesteuert wird. Bei der elektromagnetische Wellen abstrahlende Quelle handelt es sich entweder um eine Instrumententafelbeleuchtung oder eine Fahrzeuginnenraumbeleuchtung. Die bekannte Vorrichtung hat den Nachteil, dass der Fahrer durch die Beleuchtungsquelle geblendet wird. Diese Gefahr ist in der Nacht besonders hoch, weil ja die Umgebung des Fahrers und vor allem die zu beobachtende Straße dunkel bzw. nur relativ schwach beleuchtet ist.

Es ist daher die Aufgabe der vorliegenden Erfindung, eine Bestrahlungsvorrichtung der eingangs genannten Art anzugeben, mit der die Wachheit des Fahrzeugführers gesteigert werden kann, ohne dass dieser geblendet wird.

Die erfindungsgemäße Lösung besteht darin, dass die Leuchte im wesentlichen ungerichtetes, diffuses Licht abstrahlend ausgebildet ist und außerhalb oder zumindest im Randbereich des Sichtfeldes des Fahrzeugführers angeordnet ist. Beide erfindungsgemäßen Maßnahmen führen zu einer starken Verminderung bis vollständigen Unterdrückung der Blendwirkung.

In einer bevorzugten Ausführungsform weist die Leuchte mindestens eine Leuchtfläche auf, die in Bezug auf die Hauptblickrichtung des Fahrzeugführers unter einem Höhenwinkel nach oben versetzt angeordnet ist. Je größer die lichtabstrahlende Leuchtfläche der Leuchte ist, desto geringer kann bei gegebener Strahlungsleistung die Leuchtdichte gewählt werden, wodurch die Blendgefahr weiter verringert wird. Durch die nach oben versetzt angeordnete Leuchtfläche wird der für die Unterdrückung der Melatoninproduktion besonders empfindliche untere Augenbereich besonders wirkungsvoll bestrahlt. Unter Leuchtfläche der Leuchte ist hier selbstverständlich jede Austrittsöffnung der Leuchte zu verstehen, sei es dass sie mit einer ebenen, gekrümmten oder sonst wie strukturierten Abdeckung versehen ist. Unter Hauptblickrichtung des Fahrzeugführers ist gewöhnlich die Fahrtrichtung des Fahrzeugs zu verstehen.

Wenn die Leuchtfläche oberhalb eines Höhenwinkels von etwa 40° in Bezug auf die Hauptblickrichtung des Fahrzeugführers angeordnet ist, wird die Blendwirkung weitgehend unterbunden und die Bestrahlungswirkung optimiert.

Da die Bestrahlungswirkung bei Bestrahlung des Fahrzeugführers von hinten oder auch senkrecht von oben vernachlässigbar ist, wird in Ausgestaltung der Erfindung empfohlen, dass sich die Leuchtfläche in Bezug auf die Hauptblickrichtung des Fahrzeugführers über einen Höhenwinkelbereich von mindestens 40° bis höchstens 80° erstreckt, vorzugsweise von 45° bis 65°. Durch die Begrenzung auf die genannten Winkelbereiche kann die Größe der Leuchte in wirtschaftlich vertretbarem Rahmen gehalten werden, ohne Einbußen bei der beabsichtigten Bestrahlungswirkung.

Dies gilt auch im Hinblick auf die Begrenzung der seitlichen Erstreckung der Leuchte, nämlich wenn gemäß einer Ausgestaltungsform der Erfindung sich die Leuchtfläche in Bezug auf die Hauptblickrichtung des Fahrzeugführers von links oben bis rechts oben über einen breiten Winkelbereich von mindestens 40° erstreckt.

In einer bevorzugten Ausführungsform ist die Leuchte am Dach des Fahrzeugs angebracht, wodurch sich die vorgenannten Winkelbereiche auf einfachste Weise realisieren lassen.

Die Wirksamkeit der Bestrahlung hinsichtlich der Unterdrückung der Melatoninproduktion wird durch die Maßnahme, dass die Leuchte blaues Licht abstrahlend ausgebildet ist, vorzugsweise mit einer Wellenlänge von 464 nm, noch verbessert. Mit einer derartig ausgestalteten blauen und diffusen Beleuchtung über einen relativ großen Raumwinkelbereich von oben wird der für die Unterdrückung der Melatoninproduktion besonders wirksame blaue Himmel fast perfekt nachgebildet.

Eine für die erfindungsgemäße Bestrahlungsvorrichtung besonders geeignete Leuchte weist mindestens eine Lichtquelle und mindestens einen Diffusor auf, der als Leuchtfläche dient. Der Diffusor macht das Licht der Lichtquelle diffus, wobei es gleichzeitig über eine relativ große Leuchtfläche verteilt wird. Beides führt zur Verringerungen der Blendwirkung. Dabei kann bereits mit einer Lichtquelle eine relativ große Leuchtfläche ausgeleuchtet werden. In der Praxis weist die Leuchte jedoch vorzugsweise eine Vielzahl von Lichtquellen auf, wodurch eine relativ große Leuchtfläche bei relativ flachem Gehäuse der Leuchte möglich wird.

In Ausgestaltung der Erfindung ist der Diffusor als Milchglasscheibe ausgeführt. Diese ist einfach und kostengünstig herstellbar. Statt einer Glasscheibe kann jedoch ebenso gut eine Kunststoffscheibe verwendet werden.

Gemäß einer bevorzugten Ausführungsform der Leuchte sind als Lichtquelle blaue Leuchtdioden vorgesehen, die über die Diffusorfläche verteilt angeordnet sind. Eine derartige Leuchte kann besonders kompakt, leicht und kostengünstig gefertigt werden.

In Ausgestaltung der erfindungsgemäßen Leuchte weist die Leuchtfläche oder die Gesamtheit der Leuchtflächen eine längliche, vorzugsweise rechteckige Form mit Abmessung von 5 bis 10 cm im Querschnitt und von 10 bis 30 cm im Längsschnitt auf.

Selbstverständlich kann die erfindungsgemäße Leuchte statt einer großen Leuchtfläche auch aus mehreren kleinen Leuchtflächen zusammengesetzt sein.

Ein Ausführungsbeispiel der Erfindung wird nachfolgend an Hand der Zeichnungen näher erläutert. Die Figuren zeigen im Einzelnen:
- Fig. 1:: eine erfindungsgemäße Bestrahlungsvorrichtung eines Kraftfahrzeuges, in einer schematischen Prinzipskizze;
- Fig. 2:: ein vergrößertes Detail A aus Fig. 1;
- Fig. 3:: den Aufbau einer Leuchte für eine erfindungsgemäße Bestrahlungsvorrichtung.

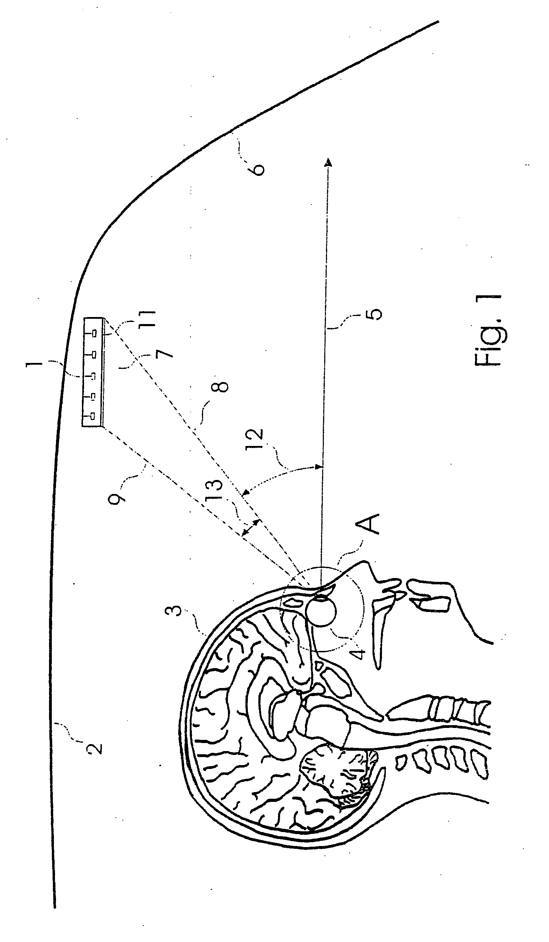

In Fig. 1 erkennt man eine Leuchte 1, die an einem Dach 2 eines Kfz im Kopfbereich eines Fahrzeugführers, von dem symbolisch ein Schnitt durch den Kopf 3 dargestellt ist, angebracht ist. Ein Auge 4 blickt bei normaler Vorwärtsfahrt des Fahrzeugs in Blickrichtung 5 durch die Windschutzscheibe 6. Die Leuchte 1 strahlt diffuses Licht 7 in den Innenraum des Fahrzeugs. In Fig. 1 ist ein unterer Randstrahl 8 und eine oberer Randstrahl 9 eingezeichnet, um einen Bereich abzugrenzen, aus dem das diffuse Licht 7 der Leuchte 1 in das Auge 4 des Fahrzeugführers fällt.

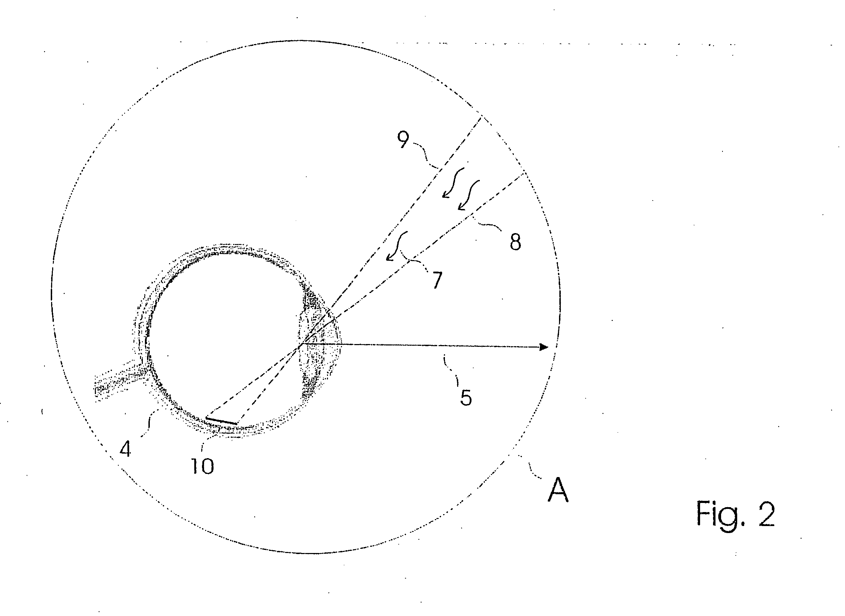

Wie man am bestens in Fig. 2 erkennt, trifft das durch die Randstrahlen 8 und 9 begrenzte Licht 7 im Auge 4 auf einen unteren Augenbereich 10, der mit Sinneszellen versehen ist, die für die Regelung der Melatoninproduktion verantwortlich sind. Dabei fällt das Licht 7 aus der Leuchte 1 nicht in das hauptsächliche Sichtfeld des Fahrzeugführers, welches in der Darstellung von Fig. 1 sein Zentrum in der Blickrichtung 5 hat und sich über einen gewissen Raumwinkelbereich um die Blickrichtung 5 herum erstreckt.

Eine äußere Leuchtfläche 11 der Leuchte 1 bestimmt durch ihre Ausdehnung in Fahrtrichtung den Winkelbereich zwischen den Randstrahlen 8, 9, aus dem Licht in das Auge 4 fällt. In Bezug auf die Hauptblickrichtung 5 des Fahrzeugführers ist die Leuchtfläche 11 soweit nach oben verschoben, dass der durch die Randstrahlen 8, 9 begrenzte Winkelbereich außerhalb des Hauptgesichtsfeldes des Fahrzeugführers liegt. Eine entscheidende Bedeutung kommt hierbei dem Winkel 12 zwischen der Hauptblickrichtung 5 und dem unteren Randstrahl 8 zu. Dieser muss genügend groß gewählt werden, damit das Licht 7 der Leuchte 1 keine Blendwirkung hervorruft. Deshalb muss darauf geachtet werden, dass die Leuchtfläche 11 in Bezug auf das Auge 4 des Fahrzeugführers so angeordnet ist, dass sie insgesamt oberhalb eines Höhenwinkels 12 von etwa 40° in Bezug auf die Hauptblickrichtung 5 liegt.

Da die Leuchtfläche 11 der Leuchte aus wirtschaftlichen Gründen eine gewissen Ausdehnung nicht überschreiten sollte, ergibt sich eine Begrenzung des Höhenwinkelbereiches nach oben. Ein zwischen der Hauptblickrichtung 5 und dem oberen Randstrahl 9 gemessener Höhenwinkel 13 stellt somit eine obere Grenze des Höhenwinkelbereiches da, der sich vorzugsweise zwischen einem Höhenwinkel 12 von 40° bis zu einem Höhenwinkel 13 von 80° erstreckt. Größere Winkel als 80° sind in diesem Zusammenhang nämlich nicht erforderlich, weil Licht aus einem so steilen Winkel von oben oder gar schräg von hinten das Auge 4 des Fahrzeugführers nicht mehr erreichen kann und deshalb unwirksam in Bezug auf die Reduzierung der Melatoninproduktion ist. Der optimale Bereich in Bezug auf geringe Blendung und hohe Wirksamkeit bezüglich des Melatoninproduktion liegt zwischen einem unteren Höhenwinkel 12 von 45° und einem oberen Höhenwinkel 13 von 65°.

Analog zum Höhenwinkelbereich gibt es auch einen Breitenwinkelbereich, der durch die Abmessungen der Leuchtfläche 11 in horizontaler Richtung quer zur Fahrtrichtung des Fahrzeugs bestimmt ist. Auch diese Abmessung der Leuchte kann aus wirtschaftlichen Gründen nicht beliebig groß gewählt werden. Wenn andererseits die Leuchtfläche 11 wie in Fig. 1 dargestellt bereits nach oben versetzt angeordnet ist, kann die seitliche Ausdehnung der Leuchtfläche 11 nach links oben bzw. rechts oben nicht zu einer Blendwirkung führen, da das Hauptgesichtsfeld des Fahrzeugführers nicht betroffen ist. Andererseits wird die Blendwirkung bei Vergrößerung der Leuchtfläche 11 bei gegebener Strahlungsleistung verringert, weil bei größerer Gesamtfläche die Leuchtdichte verringert werden kann. Ein guter Kompromiss zwischen möglichst großer Leuchtfläche zur Reduzierung der Blendwirkung einerseits und dem aus wirtschaftlichen Überlegungen resultierenden Erfordernis einer Begrenzung der Leuchtengröße erhält man, wenn die Leuchtfläche aus Sicht des Fahrzeugführers von links oben bis rechts oben sich über einen Breitenwinkelbereich von etwa 40° erstreckt.

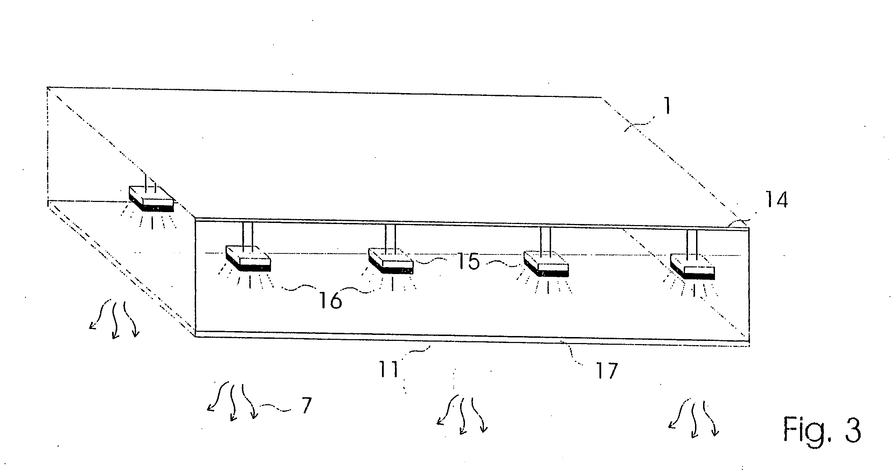

Fig. 3 zeigt den Aufbau einer erfindungsgemäßen Leuchte 1. Diese besteht aus einem im wesentlichen quaderförmigen Gehäuse 14, in welchem eine Vielzahl von blauen Leuchtdioden 15 angeordnet sind. Aus den Leuchtdioden fällt jeweils ein Lichtbündel 16 mit relativ stark gerichtetem Licht auf eine Milchglasplatte 17, die als untere Abdeckung des Gehäuses 14 dient. Selbstverständlich kann die Milchglasplatte auch durch eine lichtstreuende Kunststoffplatte ersetzt werden.

Die Platte 17 dient als Diffusor, der die relativ gerichteten Lichtbündel 16 aus den Leuchtdioden 15 in vollkommen diffuses Licht 7 verwandelt, welches von der unteren Außenfläche der Platte 7, die somit die Leuchtfläche 11 der Leuchte 1 bildet, in alle möglichen Raumrichtungen abgestrahlt wird.

Typischerweise hat eine erfindungsgemäße Leuchte 1 ein quaderförmiges Gehäuse 14 mit 5 bis 10 cm Breite, 10 bis 30 cm Länge und etwa 1 cm Dicke, welches somit auf einfache Weise an der Innenseite des Fahrzeugdaches 2 im Kopfbereich des Fahrzeugführers angebracht werden kann.

### BEZUGSZEICHENLISTE

- 1: Leuchte
- 2: Dach
- 3: Kopf
- 4: Auge
- 5: Blickrichtung
- 6: Windschutzscheibe
- 7: diffuses Licht
- 8: unterer Randstrahl
- 9: oberer Randstrahl
- 10: Augenbereich
- 11: Leuchtfläche
- 12: Höhenwinkel
- 13: Höhenwinkel
- 14: Gehäuse
- 15: Leuchtdioden
- 16: Lichtbündel
- 17: Milchglasscheibe

## Patentansprüche

1. Bestrahlungsvorrichtung zur Bestrahlung eines Fahrzeugführers (3), mit mindestens einer im Kopfbereich des Fahrzeugführers angeordneten Leuchte (1), **dadurch gekennzeichnet , dass** die Leuchte (1) im wesentlichen ungerichtetes, diffuses Licht (7) abstrahlend ausgebildet und außerhalb oder zumindest im Randbereich des Sichtfeldes des Fahrzeugführers (3) angeordnet ist.

2. Vorrichtung nach Anspruch 1, **dadurch gekennzeichnet, dass** die Leuchte (1) mindestens eine Leuchtfläche (11) aufweist, die in Bezug auf die Hauptblickrichtung (5) des Fahrzeugführers (3) unter einem Höhenwinkel (12) nach oben versetzt angeordnet ist.

3. Vorrichtung nach Anspruch 2, **dadurch gekennzeichnet, dass** die Leuchtfläche (11) außerhalb eines Höhenwinkels (12) von etwa 40° in Bezug auf die Hauptblickrichtung (5) des Fahrzeugführers (3) angeordnet ist.

4. Vorrichtung nach Anspruch 2 oder 3, **dadurch gekennzeichnet, dass** sich die Leuchtfläche (11) in Bezug auf die Hauptblickrichtung (5) des Fahrzeugführers (3) über einen Höhenwinkelbereich erstreckt, der von mindestens 40° bis höchstens 80° reicht, vorzugsweise von einem unteren Höhenwinkel (12) von 45° bis zu einem oberen Höhenwinkel (13) von 65°.

5. Vorrichtung nach einem der Ansprüche 2 bis 4, **dadurch gekennzeichnet, dass** sich die Leuchtfläche (11) in Bezug auf die Hauptblickrichtung (5) des Fahrzeugführers (3) von links oben bis rechts oben über einen Breitenwinkelbereich von mindestens 40° erstreckt.

6. Vorrichtung nach einem der vorhergehenden Ansprüche, **dadurch gekennzeichnet, dass** die Leuchte (1) am Dach (2) des Fahrzeugs angebracht ist.

7. Vorrichtung nach einem der vorhergehenden Ansprüche, **dadurch gekennzeichnet, dass** die Leuchte (1) blaues Licht abstrahlend ausgebildet ist, vorzugsweise mit einer Wellenlänge von 464 nm.

8. Leuchte für eine Bestrahlungsvorrichtung nach einem der vorhergehenden Ansprüche, **dadurch gekennzeichnet, dass** sie mindestens eine Lichtquelle (15) und mindestens einen Diffusor (17) aufweist, der als Leuchtfläche (11) dient.

9. Leuchte nach Anspruch 8, **dadurch gekennzeichnet, dass** der Diffusor eine Milchglasscheibe (17) ist.

10. Leuchte nach Anspruch 8 oder 9, **dadurch gekennzeichnet, dass** als Lichtquelle blaue Leuchtdioden (15) vorgesehen sind, die über die Diffusorfläche verteilt angeordnet sind.

11. Leuchte nach einem der Ansprüche 8 bis 10, **dadurch gekennzeichnet, dass** die Leuchtfläche (11) oder die Gesamtheit der Leuchtflächen eine längliche, vorzugsweise rechteckige Form mit Abmessungen von 5 bis 10 cm im Querschnitt und von 10 bis 30 cm im Längsschnitt t
